# EUROPÄISCHE PATENTSCHRIFT

(11) **EP 3 867 598 B1**
(45) Veröffentlichungstag und Bekanntmachung des Hinweises auf die Patenterteilung: **02.07.2025**
(21) Anmeldenummer: 19797580.8
(22) Anmeldetag: 17.10.2019
(51) Int. Cl.: G01B 11/245, B01L 3/02, B29C 45/76, G01B 11/27

(54) **VERFAHREN UND VORRICHTUNG ZUM ÜBERPRÜFEN VON SPRITZGUSSTEILEN, INSBESONDERE PIPETTENSPITZEN**
METHOD AND DEVICE FOR INSPECTING INJECTION-MOULDED PARTS, IN PARTICULAR WAFER TIPS
PROCÉDÉ ET DISPOSITIF DE VÉRIFICATION DE PIÈCES MOULÉES PAR INJECTION, EN PARTICULIER DE POINTES DE PIPETTE

(30) Priorität: 19.10.2018 DE 102018126019
(43) Veröffentlichungstag der Anmeldung: 25.08.2021
(73) Patentinhaber: HEKUMA GmbH, Dornierstrasse 14 85399 Hallbergmoos (DE)
(72) Erfinder: KAMMERLOHER, Jakob, 85395 Wolfersdorf (DE)
(74) Vertreter: Rings, Rolf
(86) Internationale Anmeldenummer: PCT/EP2019/078256
(87) Internationale Veröffentlichungsnummer: WO 2020/079170

(56) Entgegenhaltungen:
- EP-A1- 1 677 070
- DE-B3- 102014 102 280
- US-A- 5 904 413

## Beschreibung

Die Erfindung betrifft ein Verfahren und eine Vorrichtung zum Überprüfen von langgestreckten Spritzgussteilen, insbesondere Pipettenspitzen, in einer Haltevorrichtung wie beispielsweise einem Werkstückträger.

Ein derartiges Verfahren ist aus DE 10 2014 102 280 bekannt, wobei mit einer Kamera in Achsrichtung über einer Pipettenspitze und einer Kamera unter der Pipettenspitze die Abweichung des spitzen Endes der Pipettenspitze von der Achsrichtung ermittelt wird. Bei diesem Verfahren wird beispielsweise eine korrekt geformte Pipettenspitze in einer Schieflage in dem Werkstückträger nicht erkannt und als Ausschuss ausgesondert, nur weil wegen der Fehlausrichtung der Pipettenspitze in dem Werkstückträger die Abweichung des spitzen Endes der Pipettenspitze von der vorgegebenen Achsrichtung als Mangel bewertet wird. Nachdem Pipetten selbst und Werkstückträger häufig Unebenheiten wie z.B. Grate an den Bohrungsrändern aufweisen, kommt es häufig zu unnötigem Ausschuss aufgrund einer Schieflage der Pipettenspitze im Werkstückträger.

EP 1 677 070 A1 offenbart ein Verfahren zum Bestimmen der Durchbiegung eines Verbindungselements, wobei ein erstes Bild und ein zweites Bild aufgenommen werden und jeweilige Referenzpunkte innerhalb der Bilder bestimmt werden. Durch Verbinden der Referenzpunkte wird eine Referenzachse im Verhältnis zu der idealen Längsachse der Verbindungselemente bestimmt. In einem jeweils ersten und zweiten Prüfpunkt zwischen den Referenzpunkten aus einer anderen Sicht heraus werden die Abweichungen von der Referenzachse zu der Längsachse bestimmt, und mit dem Satz des Pythagoras wird die tatsächliche Durchbiegung der Verbindungselemente errechnet.

Aus dem weiteren Stand der Technik gemäß DE 10 2014 102 280 B3 ist ein Verfahren zur Beurteilung eines Pipettenverzugs bei der Produktion von Pipettenspitzen bekannt, bei welchem mit einer Kamera in Achsrichtung über einer Pipettenspitze und einer zweiten Kamera unter der Pipettenspitze eine etwaige Abweichung des Spitzenendes der Pipettenspitze von der Achsrichtung ermittelt wird. Eine Verformung von Pipettenspitzen kann mit diesem Verfahren festgestellt werden.

Aufgabe der Erfindung ist es, das bekannte Verfahren so zu verbessern, dass der Ausschuss an Spritzgussteilen verringert wird und Gutteile nicht schon deshalb als Ausschuss ausgesondert werden, nur weil sie in einer Schieflage in der Haltevorrichtung positioniert sind.

Diese Aufgabe wird mit einem Verfahren mit den Schritten gemäß Anspruch 1 sowie durch eine Vorrichtung mit den Merkmalen nach Anspruch 9 gelöst. Vorteilhafte Ausgestaltungen und Weiterbildungen der Erfindung sind Gegenstand der abhängigen Ansprüche.

Diese Aufgabe wird erfindungsgemäß im Wesentlichen dadurch gelöst, dass ein sich in Achsrichtung erstreckender Referenzbereich an dem langgestreckten Spritzgussteil im Werkstückträger erfasst und ausgehend von dem Referenzbereich das Spritzgussteil vermessen wird, wie dies im Anspruch 1 angegeben ist.

Im Einzelnen betrifft die Erfindung ein Verfahren zum Überprüfen von langgestreckten Spritzgussteilen P mit einer Symmetrieachse S, insbesondere Pipettenspitzen, in einer Haltevorrichtung H, gemäß Anspruch 1.

Hierbei wird der sich in Achsrichtung des Spritzgussteils erstreckende Referenzbereich RP von einem seitlich bzw. quer zur Symmetrieachse des Spritzgussteils ausgerichteten elektronischen Erfassungsmittel abgetastet.

Der Referenzbereich RP kann in verschiedener Weise ausgebildet sein. Bevorzugt ist ein flächiger Referenzbereich, beispielsweise in Form einer Mantelfläche eines rotationssymmetrischen Spritzgussteils wie einer Pipettenspitze. Es können auch beispielsweise Eckpunkte an einem Rechteck als Referenzbereich vorgesehen werden, aus deren Daten die Symmetrieachse errechnet werden kann. Hierbei sind beispielsweise die vier Eckpunkte eines Rechtecks von dem seitlich auf die Symmetrieachse blickenden elektronischen Erfassungsmittel zu erfassen.

Auch bei der Anordnung von vier Eckpunkten erstreckt sich der Referenzbereich in Achsrichtung bzw. in Richtung der Symmetrieachse, die sich aus den Referenzpunkten ergibt.

Der Referenzbereich wird bevorzugt in einem stabilen bzw. dickwandigeren Bereich des Spritzgussteils gewählt, weil dieser Bereich hinsichtlich Verformung stabiler ist als ein dünnwandiger Bereich. Mit anderen Worten wird der Referenzbereich RP im Messbereich 1 vorgesehen.

Vorteilhafterweise wird um eine aus dem Referenzbereich RP errechnete Symmetrieachse S ein Toleranzbereich T festgelegt und errechnet, ob die Lage des durch Messung ermittelten Symmetrieachsenabschnitts S2 innerhalb des Toleranzbereichs T liegt oder nicht.

Wie bereits erwähnt, wird vorteilhafterweise eine Mantelfläche oder ein Teil einer Mantelfläche an einem rotationssymmetrischen Spritzgussteil P als Referenzbereich RP im ersten Messbereich 1 verwendet.

Hierbei können auch Linien oder einzelne Punkte einer Mantelfläche als Referenzbereich ausgewählt werden.

Es ist auch möglich, wenigstens eine quer zur Symmetrieachse (S) liegende Fläche des Spritzgussteils als Referenzbereich RP zu verwenden. Zum Beispiel können zwei in Achsrichtung beabstandete, quer zum Symmetrieachse S liegende Querschnittsflächen des Spritzgussteils als Referenzbereich verwendet werden. Bei einem Spritzgussteil in Form einer Pipettenspitze aus transparentem Material können durch die seitlich von der Symmetrieachse angeordneten elektronischen Erfassungsmittel die Querschnittsflächen zur Dickenmessung der Wandstärke der Pipettenspitze abgetastet werden, woraus aus den Dickenabmessungen der Querschnittsflächen die Symmetrieachse errechnet werden kann.

Zur Erfassung einer Schräglage der Symmetrieachse relativ zur einer Achse der Haltevorrichtung wird der im Wesentlichen seitlich am Spritzgussteil erfassbare Referenzbereich durch eine Erfassungsmittel wie beispielsweise eine elektronische Kamera erfasst, die quer zur Symmetrieachse auf den Referenzbereich gerichtet ist.

Zur Erfassung einer Krümmung oder Schräglage des Spritzgussteils wird die Lage eines Symmetrieachsenabschnitts S2 des Spritzgussteils durch ein Erfassungsmittel wie zum Beispiel eine elektronische Kamera vermessen, die in Achsrichtung auf den zweiten Messbereich 2 des Spritzgussteils gerichtet wird oder auch durch ein Erfassungsmittel, das seitlich bzw. quer zum Symmetrieachsenabschnitt S2 dessen Lage erfasst.

Zur Einsparung von elektronischen Erfassungsmitteln ist es von Vorteil, wenn mittels eines Erfassungsmittels bzw. einer Kamera mit Spiegelumlenkungen sowohl in Achsrichtung die Lage des Symmetrieachsenabschnitts als auch quer zur Achsrichtung die Messdaten des Referenzbereichs erfasst werden.

Vorteilhafterweise wird das erfindungsgemäße Verfahren durchgeführt mit einer Vorrichtung zum Überprüfen von langgestreckten Spritzgussteilen P mit einer Symmetrieachse S, insbesondere Pipettenspitzen, in einer Haltevorrichtung H, umfassend eine Recheneinheit C, in der ein Referenzbereich R an dem zu messenden Spritzgussteil als Rechenbasis vorgegeben ist, wobei aus den Daten des Referenzbereichs R eine Referenzachse RA berechenbar ist, wenigstens ein Erfassungsmittel K1, das quer zur Symmetrieachse S eines in der Haltevorrichtung H gehaltenen Spritzgussteils P auf dieses gerichtet und so ausgebildet ist, dass das Erfassungsmittel einen Referenzbereich RP am Spritzgussteil P entsprechend dem in der Recheneinheit C vorgegebenen Referenzbereich R erfasst und aus den Messdaten eine Symmetrieachse S des gemessenen Referenzbereichs RP errechnet, und wenigstens ein weiteres Erfassungsmittel K2 zum Messen der Symmetrieachse S in einem zweiten Messbereich 2 in einem Abstand in Achsrichtung von dem ersten Messbereich 1.

Vorteilhafterweise sind die Erfassungsmittel im ersten Messbereich 1 und/oder im zweiten Messbereich 2 um 90° versetzt zueinander auf die Symmetrieachse des Spritzgussteils gerichtet.

Hierbei können die Erfassungsmittel im ersten Messbereich 1 quer zur Symmetrieachse des Spritzgussteils ausgerichtet sein und im zweiten Messbereich 2 in Achsrichtung auf eine Stirnseite des Spritzgussteils gerichtet sein.

Im ersten Messbereich können in Achsrichtung beabstandete Erfassungsmittel seitlich auf die Symmetrieachse gerichtet sein, beispielsweise zum Erfassen einer Querschnittsfläche des Spritzgussteils.

Als elektronische Erfassungsmittel können elektronische Kameras, Interferometer oder Infrarot-Sensoren, 3D-Sensoren oder Stereokameras vorgesehen werden, wobei in verschiedenen Bereichen auch unterschiedliche Erfassungsmittel vorgesehen sein können.

Es kann von Vorteil sein, einen Dorn zur Aufnahme eines rotationssymmetrischen Spritzgussteils wie beispielsweise einer Pipettenspitze vorzusehen, der mit einer Anlagefläche am Innenumfang der Pipettenspitze in Passform anliegt und auf einem freiliegendem äußeren Abschnitt den Referenzbereich aufweist, der von einer Kamera seitlich abgetastet wird.

Eine derartige messtechnische Verlängerung des Spritzgussteils kann beispielsweise auch an einem flächigen Spritzgussteil vorgesehen werden, das mit dem Spritzgussteil in Passform verbunden ist.

Vorteilhafterweise ist der Dorn in Längsrichtung mit einer Bohrung zum Anlegen von Unter- bzw. Überdruck versehen, damit eine Pipettenspitze angesaugt und durch Überdruck wieder abgestreift werden kann.

Der Dorn kann vorteilhafterweise drehbar gelagert werden, um durch Drehen des Dorns die Dornlage bzw. dessen Symmetrieachse zu vermessen.

Zum Abstreifen des Spritzgussteils bzw. der Pipettenspitze von dem Dorn kann eine Hülse am äußeren freien Ende des Dorns vorgesehen sein, die relativ zum Dorn in Achsrichtung des Dorns bewegbar ist oder umgekehrt. Anstelle einer Hülse kann auch ein anderes mechanisches Element vorgesehen sein zum Abstreifen einer Pipettenspitze vom Dorn.

Beispielsweise Ausführungsformen der Erfindung werden nachfolgend anhand der Zeichnung näher erläutert. Es zeigen
- Fig. 1: eine Skizze zur Erläuterung des Messverfahrens,
- Fig. 2: eine Pipettenspitze in einer Seitenansicht mit verschiedenen Achsen,
- Fig. 2a: schematisch die Spitze einer Pipettenspitze als Detail aus Fig. 2,
- Fig. 3: schematisch eine Messanordnung mit einer anderen Erfassung des Referenzbereichs RP,
- Fig. 4: schematisch eine weitere Abwandlung der Messanordnung im Referenzbereich, und
- Fig. 5: schematisch Erfassungsmittel im Innenbereich der Pipettenspitze.

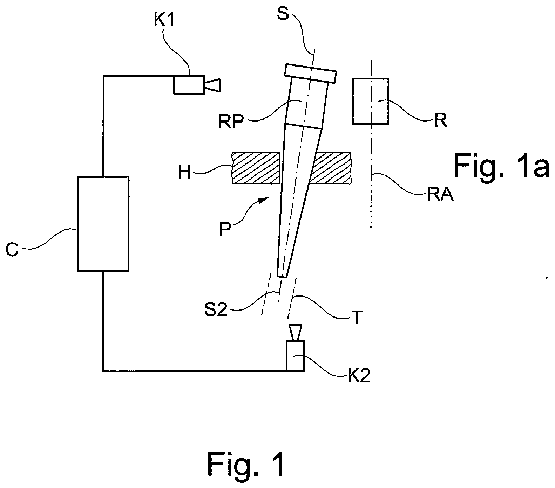

Fig. 1 zeigt schematisch ein Spritzgussteil P, das auch ein flächiges Spritzgussteil sein kann, mit einer Symmetrieachse S entsprechend der Längsachse des langgestreckten Spritzgussteils P.

Mit K1 ist ein elektronisches Erfassungsmittel, z.B. eine Kamera, bezeichnet, die seitlich auf einen rechteckigen Referenzbereich RP gerichtet ist.

Mit K2 ist ein zweites elektronisches Erfassungsmittel, z.B. eine Kamera, in Achsrichtung von unten auf das Spritzgussteil P gerichtet.

In dem elektronischen Erfassungsmittel K1 oder einer daran angeschlossenen Recheneinheit C ist eine rechteckige Referenzfläche R als zu erfassender Referenzbereich vorgegeben. Aus der Mitte zwischen den beiden Längsseiten des rechteckigen Referenzbereichs R kann eine Referenzachse RA beispielsweise in der an die Kamera K1 angeschlossene Recheneinheit C errechnet werden.

Fig. 1a zeigt den vorgegebenen Referenzbereich R mit der daraus errechenbaren Referenzachse RA. Diese Vorgaben in Fig. 1a sind als Nullwert bzw. Basis vorgegeben und z.B. in der Recheneinheit C abgespeichert, um davon ausgehend die erforderlichen Berechnungen der nachfolgend angegebenen Achslagen auszuführen.

Mit H ist eine Haltevorrichtung wie beispielsweise ein Werkstückträger bezeichnet, in dessen Bohrung das Spritzgussteil P in einer Schieflage positioniert ist.

Der zu erfassender Referenzbereich RP am Spritzgussteil P wird so ausgewählt, dass aus den Messdaten des Referenzbereichs RP die Symmetrieachse S des Spritzgussteils P errechenbar ist.

Der Referenzbereich RP am Spritzgussteil P bildet bei korrekter Abbildung durch die Kamera K1 den in der Recheneinheit C vorgegebenen Referenzbereich R, es wird also vorab der Referenzbereich RP am Spritzgussteil P ausgewählt und dessen korrekte Wiedergabe z.B. aus einer Zeichnung des Spritzgussteils P entnommen und in der Recheneinheit C als Null-Basis abgespeichert.

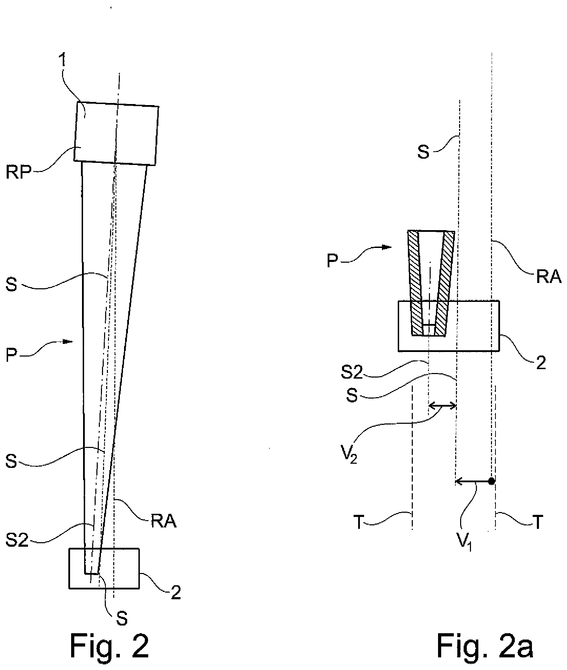

Bei der Prüfung der Lage der einer Pipettenspitze P im Werkstückträger H wird zunächst der Referenzbereich RP in einem oberen Endbereich (erster Bereich 1 in Fig. 2) der Pipettenspitze P durch das erste Erfassungsmittel K1 erfasst (erster Schritt).

Danach wird aus den Messdaten des erfassten Referenzbereichs RP in der Kamera K1 oder in der angeschlossenen Recheneinheit C die Symmetrieachse S des Spritzgussteils P errechnet (zweiter Schritt).

Mit dem zweiten Erfassungsmittel z.B. in Form der Kamera K2 wird die räumliche Lage des unteren Symmetrieachsenabschnitts S2 der Spitze des Spritzgussteils P in dem vom ersten, oberen Bereich 1 in Achsrichtung beabstandeten zweiten Bereich 2 um die Spitze der Pipettenspitze P erfasst (dritter Schritt). Fig. 2a zeigt den zweiten Bereich 2 in vergrößerter Darstellung.

Hierauf wird bestimmt, ob die gemessene räumliche Lage des Symmetrieachsenabschnitts S2 im Spitzenbereich mit der zuvor errechneten Symmetrieachse S übereinstimmt oder nicht (vierter Schritt).

Liegt Übereinstimmung zwischen der räumlichen Lage des Symmetrieachsenabschnitts S2 und der Symmetrieachse S vor, so wird davon ausgegangen, dass die Pipettenspitze P korrekt geformt ist.

Wird dagegen bei der Ansicht in Fig. 1 ein seitlicher Abstand bzw. ein Versatz des Symmetrieachsenabschnitts S2 von der zuvor errechneten Symmetrieachse S festgestellt, so liegt eine Verformung des unteren Endbereichs der Pipettenspitze P vor, weil der Achsabschnitt S2 nicht auf der Symmetrieachse S liegt, wie dies z.B. Fig. 2 und 2a zeigen.

Fig. 1 zeigt schematisch einen Toleranzbereich T um die Symmetrieachse S, der in der Recheneinheit C vorgegeben wird.

Wenn sich die räumliche Lage des Symmetrieachsenabschnitts S2 innerhalb des Toleranzbereichs T befindet, also nur im Rahmen dieses Toleranzbereichs T von der errechneten Symmetrieachse S abweicht, so wird der Spitzenbereich als ausreichend korrekt geformt bewertet, so dass es nicht erforderlich ist, die vermessene Pipettenspitze P als Ausschuss auszusondern.

Dies wäre dann erforderlich, wenn der gemessene Symmetrieachsenabschnitt S2 im unteren Endbereich der Pipettenspitze P außerhalb des Toleranzbereichs T um die Symmetrieachse S liegen würde.

In der Darstellung der Fig. 1 liegt der Symmetrieachsenabschnitt S₂ auf der Symmetrieachse S.

Nachdem in der Praxis an einer langgestreckten Pipettenspitze P die Symmetrieachse S und der Symmetrieachsenabschnitt S₂ meist von der rechnerischen Referenzachse RA abweichen wird, sind in Fig. 2 und 2a die Symmetrieachse S und der untere Abschnitt S2 deutlicher wiedergegeben.

Fig. 2 zeigt schematisch eine Pipettenspitze P mit den verschiedenen Achsen, die in vergrößerter Darstellung in Fig. 2a im Einzelnen wiedergegeben sind.

Die aus der Messung des Referenzbereichs RP (erster Bereich) errechnete Symmetrieachse S der Pipettenspitze P verläuft bei dem in Fig. 2 dargestellten Ausführungsbeispiel z.B. wegen einer Schräglage der Pipettenspitze P im Halter H oder wegen einer geringförmigen Verformung des Referenzbereichs RP relativ zu dem in der Recheneinheit C vorgegebenen Referenzbereich R (Fig. 1a) seitlich nach links versetzt, so dass die aus RP errechnete Symmetrieachse S schon im oberen konischen Bereich der Pipettenspitze P von der aus R errechneten Referenzachse RA abweicht.

Zusätzlich liegt eine Verformung des spitzen Endbereichs der Pipettenspitze P dadurch vor, dass der insgesamt konische untere Bereich im unteren Endbereich nochmals nach links in Fig. 2 verbogen ist, so dass der Symmetrieachsenabschnitt S2 des Endbereichs der Pipettenspitze seitlich von der Symmetrieachse S der Pipettenspitze liegt, die den oben erwähnten Abstand von der Referenzachse RA hat, die den rechnerischen Nullpunkt bildet.

Fig. 2a zeigt in vergrößerter Darstellung die Situation im zweiten Messbereich 2 um die Spitze der Pipettenspitze P, wobei V₁ den Versatz der Symmetrieachse S von der Referenzachse RA und V₂ den Versatz des Achsabschnitts S₂ von der Symmetrieachse S wiedergibt.

Wenn die Lage des Symmetrieachsenabschnitts S2 der Spitze der Pipettenspitze P innerhalb des Toleranzbereichs T um die Symmetrieachse S liegt, wie Fig. 2a zeigt, ergibt die Prüfung der Pipettenspitze P, dass eine ausreichend korrekte Form vorliegt.

Wenn dagegen der Symmetrieachsenabschnitt S2 außerhalb des Toleranzbereichs T in Fig. 2a liegt, so würde die Pipettenspitze P als zu stark verformt ausgesondert.

Bei dieser Messung ist es auch möglich, mittels des elektronischen Erfassungsmittels K2 exakte Messwerte der Achslage zu ermitteln, um beispielsweise statistische Werte der Achsabweichung zu erhalten.

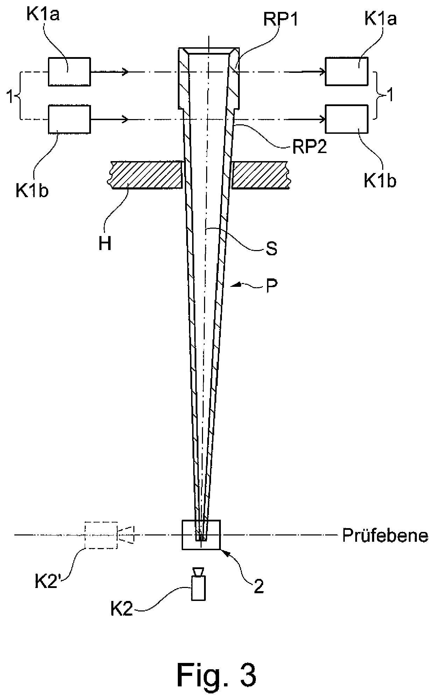

Fig. 3 zeigt schematisch eine Messanordnung an einer Pipettenspitze P in einer Halteeinrichtung H, wobei am oberen Endbereich der Pipettenspitze P durch zwei beabstandet, in Achsrichtung untereinander angeordnete Erfassungsmittel K1a und K1b die Dickenabmessung des oberen Endbereichs der Pipettenspitze P durch eine Betrachtung quer zur Achsrichtung ermittelt wird, so dass sich zwei Querschnittsansichten der Pipettenspitze mit unterschiedlich dicken Ringen als Referenzbereiche RP₁ und RP₂ ergeben. Aus den beiden Ringen kann ohne Weiteres die Symmetrieachse S berechnet werden, die bei korrekter Formgebung mit dem Symmetrieachsenabschnitt S2 des Endbereichs zusammenfällt. In seltenen Einzelfällen kann die aus dem gemessenen Referenzbereich RP errechnete Symmetrieachse S mit der aus dem vorgegebenen Referenzbereich R errechneten Referenzachse RA zusammenfallen.

Der erste Messbereich 1 (RP₁ und RP₂ in Fig. 3) wird vorzugsweise am oberen Endbereich einer Pipettenspitze P vorgesehen, weil dieser Endbereich dazu dient, die Pipettenspitze mit einem Laborgerät bei der späteren Nutzung der Pipettenspitze zu erfassen, wobei mittels des Laborgeräts die Pipettenspitze in die enge Öffnung eines anderen Gefäßes eingeführt wird. Auch ist durch die größeren Wandstärken im oberen Endbereich der Referenzbereich RP formstabiler ausgebildet und weniger einem Verzug unterworfen als ein Bereich mit geringer Wandstärke.

Der Referenzbereich RP kann bei einer rotationssymmetrischen Pipettenspitze beispielsweise eine innere und/oder eine äußere Mantelfläche im oberen Endbereich sein, wobei aus der Kreisform der Mantelfläche die Symmetrie- bzw. Rotationsachse S berechenbar ist.

Nach einer anderen Ausführungsform können bei einer seitlichen Ansicht durch die Erfassungsmittel K1 zwei beabstandete innere und/oder äußere Mantellinien den Referenzbereich bilden, die sich bei einer Seitenansicht des oberen Endbereichs in einer Pipettenspitze an der Mantelfläche ergeben, wobei aus den beabstandeten Mantellinien die in der Mitte liegende Symmetrieachse S errechenbar ist, wie dies auch Fig. 1 zeigt.

Nach einer weiteren Ausführungsform können zwei beabstandete Querschnittsflächen am oberen Endbereich des Spritzgussteils P Referenzbereiche bilden in Form von ringförmigen Querschnittsansichten, aus denen die Symmetrieachse S errechenbar ist, wie aus Fig. 3 ableitbar ist.

Nach einer weiteren Ausführungsform kann die obere Planfläche einer Pipettenspitze als Referenzfläche verwendet werden.

Auch ist es möglich, verschiedene Referenzbereiche RP zu messen, um deren Messwerte abzugleichen.

Der vom ersten Messbereich 1 beabstandete zweite Messbereich 2 liegt im beschriebenen Ausführungsbeispiel am spitzen Ende der Pipettenspitze, der zweite Messbereich 2 kann aber auch an einer anderen Stelle der Pipettenspitze liegen, insbesondere wenn es sich um ein anderes langgestrecktes Spritzgussteil handelt als eine Pipettenspitze.

Für die beiden Messvorgänge im ersten und dritten Schritt können beispielsweise zwei Kameras K1 und K2 verwendet werden, von denen eine von unten auf die Pipettenspitze P gerichtet ist, um die Messung im dritten Schritt auszuführen, während eine weitere Kamera im ersten bzw. oberen Endbereich der Pipettenspitze quer zur Achse der Pipettenspitze P auf diese gerichtet ist, um den Referenzbereich RP zu erfassen, wie dies Fig. 1 zeigt.

Es ist auch möglich, im unteren Messbereich 2 an der Spitze der Pipettenspitze ein Erfassungsmittel wie beispielsweise eine Kamera K2' (Fig. 3) seitlich anzuordnen, die wie die Kamera K1 in einem Winkel von 90° auf die Symmetrieachse S gerichtet ist. Weiterhin können im ersten Messbereich 1 und/oder im zweiten Messbereich 2 Erfassungsmittel, beispielsweise Kameras, senkrecht zur Zeichnungsebene zusätzlich zu den wiedergegebenen Kamerapositionen vorgesehen werden.

Durch eine Spiegelanordnung ist es auch möglich, mit nur einer Kamera zu arbeiten, die beispielsweise auf den Referenzbereich RP quer zur Pipettenspitze P gerichtet ist und über eine Spiegelumlenkung auch stirnseitig das spitze Ende der Pipettenspitze P erfasst.

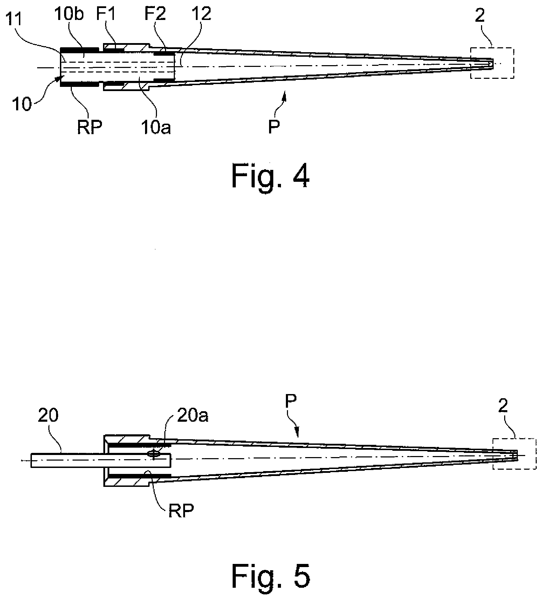

Je nach Aufwand können auch weitere Kamerapositionen vorgesehen sein, um die beiden Messvorgänge im ersten und dritten Schritt auszuführen, wobei auch andere Erfassungsmittel verwendbar sind als Kameras, wie beispielsweise Weißlicht-Sensoren (Fig. 5), Interferometer- oder Infrarot-Sensoren, 3D-Sensoren oder auch Stereokameras, insbesondere wenn als Referenzbereich RP auch eine innere Mantelfläche am oberen Endbereich einer Pipettenspitze P verwendet wird.

Fig. 4 zeigt schematisch eine Messanordnung, bei der im ersten Messbereich 1 in das obere Ende der Pipettenspitze P ein Dorn 10 eingeführt ist, an dessen freiliegendem Ende ein Referenzbereich RP ausgebildet ist.

Mit anderen Worten ist bei dieser Messanordnung der Referenzbereich RP von der Pipettenspitze P getrennt an einer messtechnischen Verlängerung der Pipettenspitze P ausgebildet, wobei der Dorn 10 die Verlängerung bildet.

Der Dorn 10 weist einen unteren konischen Abschnitt 10a auf, dessen Oberfläche F dem Innenumfang des konischen Hohlraums der Pipettenspitze P entspricht. Bei dem dargestellten Ausführungsbeispiel sind auf dem konischen Abschnitt 10a zwei in Achsrichtung beabstandete Ringflächen F₁ und F₂ als Anlageflächen ausgebildet, die exakt dem Innenumfang der Pipettenspitze P entsprechen, so dass sich bei eingesetztem Dorn 10 eine definierte Anlagefläche der Pipettenspitze P am Dorn ergibt.

Die ringförmigen Anlageflächen F₁ und F₂ können auch zu einer einzelnen längeren Anlagefläche F zusammengefasst werden.

Auf dem freiliegenden äußeren Ende 10b des Dorns ist ein Referenzbereich RP ausgebildet, der durch ein in Fig. 4 nicht dargestelltes Erfassungsmittel K erfasst wird, um aus den Daten des Referenzbereichs RP die Referenzachse RA des Dorns 10 zu berechnen, die wegen der flächigen Anlage des Dorns 10 an den Anlageflächen F₁ und F₂ mit der Symmetrieachse S der Pipettenspitze im ersten Messbereich 1 übereinstimmt.

Der Dorn 10 kann mit einer Längsbohrung 11 versehen sein, damit durch Anlegen von Unterdruck am äußeren Dornende die Pipettenspitze P in die in Fig. 4 wiedergegebene Position angesaugt werden kann.

Bei der Messanordnung in Fig. 4 wird zunächst der Dorn 10 in seiner Position durch nicht dargestellte elektronische Erfassungsmittel vermessen, damit die Ausgangsdaten wie Referenzbereich RP und Achse 12 des Dorns 10 für die weiteren Berechnungen festliegen.

Danach wird durch Anlegen von Unterdruck an der Bohrung 11 des Dorns 10 eine Pipettenspitze P angesaugt, so dass die Anlageflächen F des Dorns an den Innenumfangsflächen der Pipettenspitze vollflächig anliegen.

Anhand des Referenzbereichs RP wird die Symmetrieachse S der Pipettenspitze P berechnet, wobei davon ausgegangen wird, dass die Symmetrieachse S der Pipettenspitze P im Bereich der Anlage am Dorn identisch ist mit der Symmetrieachse 12 des Dorns 10.

Die Messung im Messbereich 2 an der Spitze der Pipettenspitze P kann in verschiedener Weise bei dieser Messanordnung ausgeführt werden.

Der Dorn 10 kann drehbar gelagert sein. Durch Drehung des Dorns 10 und Abtastung des spitzen Endes der Pipettenspitze im Messbereich 2 durch ein elektronisches Erfassungsmittel wie z.B. die Kamera K2 kann die Auslenkung des Symmetrieachsenabschnitts S2 von der Symmetrieachse S bei der Drehung festgestellt werden. Die Auswertung erfolgt wie anhand der Fig. 2 und 2a beschrieben.

Weiterhin kann bei feststehendem Dorn 10 die Vermessung mittels zweier elektronischer Erfassungsmittel wie Kameras K1 und K2 vorgenommen werden, die um 90° relativ zueinander versetzt angeordnet sind, wie dies anhand der Fig. 1 beschrieben wurde.

Vorteilhafterweise erfolgt die Bildaufnahme des Referenzbereichs RP im Messbereich 1 und der Spitze der Pipettenspitze P im Messbereich 2 zeitgleich. Dadurch ergibt sich, dass Pseudofehler durch Schwingungen und dgl. deutlich verringert werden.

Nach der Messung kann die Pipettenspitze P durch Anlegen von Überdruck an der Bohrung 11 des Dorns 10 vom Dorn gelöst und in einem Aufnahmebehälter abgesetzt werden. Alternativ kann auch eine Hülse am äußeren Ende des Dorns relativ zu diesem verschiebbar vorgesehen werden, um die Pipettenspitze P vom Dorn 10 abzustreifen.

Fig. 5 zeigt eine weitere Messanordnung zur Erfassung des Referenzbereichs RP auf dem Innenumfang einer Pipettenspitze P mittels eines Weißlicht-Sensors 20, der die Innenumfangsfläche F der Pipettenspitze P vorzugsweise durch Drehung des Sensors 20 abtastet. Bei dem dargestellten Ausführungsbeispiel ist an dem Weißlicht-Sensor nur ein Sensorelement 20a vorgesehen. Es können auch in Achsrichtung beabstandete Sensorelemente vorgesehen werden, die bei einer Relativdrehung zwischen Pipettenspitze P und Sensor 20 auf der Innenumfangsfläche zwei beabstandete Kreise abtasten.

Anstelle eines berührungslosen Weißlicht-Sensors 20 kann auch ein Interferometer-Sensor berührungslos die Innenumfangsfläche der Pipettenspitze P zum Erfassen des Referenzbereichs RP abtasten, der in der gleichen Weise wie der Weißlicht-Sensor 20 in die Pipettenspitze P eingesetzt wird.

## Patentansprüche

1. Verfahren zum Überprüfen von langgestreckten Spritzgussteilen (P) mit einer Symmetrieachse (S), insbesondere Pipettenspitzen,
in einer Haltevorrichtung (H), mit folgenden Schritten:
- Erfassen eines in Achsrichtung des Spritzgussteils (P) sich erstreckenden Referenzbereichs (RP) in einem ersten Messbereich (1) des langestreckten Spritzgussteils (P) in der Haltevorrichtung (H) durch Erfassungsmittel (K1), wobei der Referenzbereich (RP) so gewählt wird, dass aus den Messdaten des Referenzbereichs (RP) die Symmetrieachse (S) des Spritzgussteils (P) in dem Referenzbereich (RP) berechenbar ist (erster Schritt),
- Berechnen der Symmetrieachse (S) in dem Referenzbereich (RP) aus den Messdaten des gemessenen Referenzbereichs (RP) (zweiter Schritt),
- Messen der räumlichen Lage eines Symmetrieachsenabschnitts (S2) eines vom ersten Messbereich (1) in Achsrichtung beabstandeten zweiten Messbereichs (2) des langgestreckten Spritzgussteils (P) einschließlich einer Ausrichtung und Lage einer Symmetrieachse innerhalb des Symmetrieachsenabschnitts (S2) (dritter Schritt), und
- Bestimmen, ob die räumliche Lage der Symmetrieachse des im dritten Schritt gemessenen Symmetrieachsenabschnitts (S2) des Spritzgussteils (P) in dem zweiten Messbereich (2) mit der im zweiten Schritt errechneten Symmetrieachse (S) übereinstimmt oder nicht.

2. Verfahren nach Anspruch 1, wobei um eine aus dem Referenzbereich (RP) errechnete Symmetrieachse (S) ein Toleranzbereich (T) festgelegt und errechnet wird, ob die Lage des durch Messung ermittelten Symmetrieachsenabschnitts (S2) innerhalb des Toleranzbereichs (T) liegt oder nicht.

3. Verfahren nach Anspruch 1 oder 2, wobei eine Mantelfläche oder ein Teil einer Mantelfläche an einem rotationssymmetrischen Spritzgussteil (P) als Referenzbereich (RP) im ersten Messbereich (1) verwendet wird.

4. Verfahren nach einem der Ansprüche 1 oder 2, wobei wenigstens eine quer zur Symmetrieachse (S) liegende Fläche des Spritzgussteils (P) als Referenzbereich (RP) verwendet wird.

5. Verfahren nach Anspruch 4, wobei zwei in Achsrichtung beabstandete, quer zur Symmetrieachse (S) liegende Querschnittsflächen des Spritzgussteils (P) als Referenzbereiche (RP₁, RP₂) verwendet werden.

6. Verfahren nach einem der vorhergehenden Ansprüche, wobei der Referenzbereich (RP) durch ein Erfassungsmittel (K1) wie beispielsweise eine Kamera erfasst wird, die quer zur Symmetrieachse (S) auf den Referenzbereich (RP) gerichtet wird.

7. Verfahren nach einem der vorhergehenden Ansprüche, wobei die Lage des Symmetrieachsenabschnitts (S2) des Spritzgussteils durch ein Erfassungsmittel (K2) wie beispielsweise eine Kamera gemessen wird, die in Achsrichtung auf den zweiten Messbereich (2) des Spritzgussteils (P) gerichtet wird.

8. Verfahren nach einem der Ansprüche 6 oder 7, wobei mittels einer Kamera (K) mit Spiegelumlenkungen sowohl in Achsrichtung die Lage des Symmetrieachsenabschnitts (S2) als auch quer zur Achsrichtung die Messdaten des Referenzbereichs (RP) erfasst werden.

9. Vorrichtung zum Überprüfen von langgestreckten Spritzgussteilen (P) mit einer Symmetrieachse (S), insbesondere Pipettenspitzen, in einer Haltevorrichtung (H), umfassend
eine Recheneinheit (C), in der ein in Achsrichtung sich erstreckender Referenzbereich (R) an dem zu messenden Spritzgussteil als Rechenbasis vorgegeben ist,
wobei aus den Daten des Referenzbereichs (R) eine Referenzachse (RA) berechenbar ist,
wenigstens ein Erfassungsmittel (K1), das quer zur Symmetrieachse (S) eines in der Haltevorrichtung (H) gehaltenen Spritzgussteils (P) auf dieses gerichtet und so ausgebildet ist,
dass das Erfassungsmittel einen Referenzbereich (RP) am Spritzgussteil (P) entsprechend dem in der Recheneinheit (C) vorgegebenen Referenzbereich (R) erfasst und aus den Messdaten eine Symmetrieachse (S) innerhalb des gemessenen Referenzbereichs (RP) in dem Referenzbereich (RP) errechnet, und
wenigstens ein weiteres Erfassungsmittel (K2) zum Messen der Symmetrieachse (S) in einem zweiten Messbereich (2) in einem Abstand in Achsrichtung von dem ersten Messbereich (1) auf Basis einer Ausrichtung und Lage des Spritzgussteils (P) innerhalb eines Symmetrieachsenabschnitts (S2) in dem zweiten Messbereich (2),
wobei die Recheneinheit (C) zum Bestimmen einer Übereinstimmung oder Nicht-Übereinstimmung der räumlichen Lage der Symmetrieachse in dem Symmetrieachsenabschnitt (S2) in dem zweiten Messbereich (2) und der errechneten Symmetrieachse (S) in dem Referenzbereich (RP) ausgebildet ist.

10. Vorrichtung nach Anspruch 9, wobei Erfassungsmittel im ersten Messbereich (1) und/oder im zweiten Messbereich (2) um 90° versetzt zueinander auf die Symmetrieachse (S) des Spritzgussteils (P) gerichtet sind.

11. Vorrichtung nach Anspruch 9, wobei Erfassungsmittel im ersten Messbereich (1) quer zur Symmetrieachse (S) des Spritzgussteils (P) gerichtet sind und im zweiten Messbereich (2) Erfassungsmittel in Achsrichtung auf eine Stirnseite des Spritzgussteils gerichtet sind.

12. Vorrichtung nach Anspruch 9, wobei im ersten Messbereich (1) in Achsrichtung beabstandete Erfassungsmittel (K1a, K1b) seitlich auf die Symmetrieachse (S) des Spritzgussteils (P) zum Erfassen einer Querschnittsfläche des Spritzgussteils als Referenzbereich (RP₁, RP₂) vorgesehen sind.

13. Vorrichtung nach einem der Ansprüche 9 bis 12, wobei als Erfassungsmittel elektronische Kameras, Interferometer oder Infrarot-Sensoren, 3D-Sensoren oder Stereokameras vorgesehen sind.

14. Vorrichtung nach einem der vorhergehenden Ansprüche 9 bis 13, wobei ein Dorn (10) zur Aufnahme eines rotationssymmetrischen Spritzgussteils wie beispielsweise einer Pipettenspitze (P) vorgesehen ist, der mit einer Anlagefläche (F) am Innenumfang der Pipettenspitze (P) anliegt und auf einem freiliegenden Abschnitt (10b) einen Referenzbereich (RP) aufweist.

15. Vorrichtung nach Anspruch 14, wobei der Dorn (10) mit einer Längsbohrung (11) zum Anliegen von Unter- bzw. Überdruck versehen ist.

16. Vorrichtung nach Anspruch 14 oder 15, wobei der Dorn (10) drehbar gelagert ist.

## Claims

1. A method for inspecting elongated injection-molded parts (P) with an axis of symmetry (S), in particular pipette tips,
in a holding device (H), comprising the following steps:
- detecting a reference area (RP) extending in the axial direction of the injection-molded part (P) in a first measuring area (1) of the elongated injection-molded part (P) in the holding device (H) by detecting means (K1), wherein the reference area (RP) is selected such that the axis of symmetry (S) of the injection-molded part (P) in the reference area (RP) can be calculated from the measurement data of the reference area (RP) (first step),
- calculating the axis of symmetry (S) in the reference area (RP) from the measurement data of the measured reference area (RP) (second step),
- measuring the spatial position of a symmetry axis section (S2) of a second measuring area (2) of the injection-molded part (P) spaced apart in the axial direction from the first measuring area (1), including an orientation and position of an axis of symmetry within the symmetry axis section (S2) (third step), and
- determining whether or not the spatial position of the axis of symmetry of the symmetry axis section (S2) of the injection-molded part (P) measured in the third step in the second measuring area (2) corresponds to the symmetry axis (S) calculated in the second step.

2. The method according to claim 1, wherein a tolerance range (T) is defined around a symmetry axis (S) calculated from the reference area, and it is calculated whether the position of the symmetry axis section (S2) determined by measurement lies within the tolerance range (T) or not.

3. The method according to claim 1 or 2, wherein a lateral surface or a portion of a lateral surface on a rotationally symmetrical injection-molded part (P) is used as the reference area (RP) in the first measuring area (1).

4. The method according to one of claims 1 or 2, wherein at least one surface of the injection-molded part (P) lying transversely to the axis of symmetry (S) is used as the reference area (RP).

5. The method according to claim 4, wherein two axially spaced cross-sectional surfaces of the injection-molded part (P) lying transversely to the axis of symmetry (S) are used as the reference regions (RP₁, RP₂).

6. The method according to one of the preceding claims, wherein the reference area (RP) is detected by a detection means (K1) like for example a camera, which is directed transversely to the axis of symmetry (S) onto the reference area (RP).

7. The method according to one of the preceding claims, wherein the position of the symmetry axis section (S2) of the injection-molded part is measured by a detection means (K2) like for example a camera, which is directed in the axial direction onto the second measuring area (2) of the injection-molded part (P).

8. The method according to one of claims 6 or 7, wherein by means of a camera (K) with mirror deflections, in axial direction the position of the symmetry axis section (S2) and, transverse to the axial direction, the measurement data of the reference area (RP) are recorded.

9. A device for inspecting elongated injection-molded parts (P) with an axis of symmetry (S), in particular pipette tips, in a holding device (H), comprising
a computing unit (C) in which a reference region (R) extending in the axial direction on the injection-molded part to be measured is specified as the calculation basis,
wherein a reference axis (RA) can be calculated from the data of the reference region (R),
at least one detection means (K1) which is directed towards an injection-molded part (P) held in the holding device (H), transversely to the axis of symmetry (S) of the injection-molded part (P), and is configured such that
the detection means detects a reference area (RP) on the injection-molded part (P) corresponding to the reference region (R) predetermined in the computing unit (C) and calculates an axis of symmetry (S) within the measured reference area (RP) in the reference area (RP) from the measured data, and
at least one further detection means (K2) for measuring the axis of symmetry (S) in a second measuring area (2) at a distance in the axial direction from the first measuring area (1) based on an orientation and position of the injection-molded part (P) within a symmetry axis section (S2) in the second measuring area (2),
wherein the computing unit (C) is configured to determine a correspondence or non-correspondence of the spatial position of the symmetry axis in the symmetry axis section (S2) in the second measuring area (2) and the calculated symmetry axis (S) in the reference area (RP).

10. The device according to claim 9, wherein detection means in the first measuring area (1) and/or in the second measuring area (2) are directed at the axis of symmetry (S) of the injection-molded part (P) at a 90° offset from one another.

11. The device according to claim 9, wherein the detection means in the first measuring area (1) are directed transversely to the axis of symmetry (S) of the injection-molded part (P), and in the second measuring area (2), the detection means are directed in the axial direction toward an end face of the injection-molded part.

12. The device according to claim 9, wherein the first measuring area (1) includes detection means (K1a, K1b) spaced apart in the axial direction laterally toward the axis of symmetry (S) of the injection-molded part (P) for detecting a cross-sectional area of the injection-molded part as a reference region (RP₁, RP₂).

13. The device according to one of claims 9 to 12, wherein electronic cameras, interferometers or infrared sensors, 3D sensors or stereo cameras are provided as detection means.

14. The device according to one of the preceding claims 9 to 13, wherein a mandrel (10) is provided for receiving a rotationally symmetrical injection-molded part, like for example a pipette tip (P) which abuts by means of a contact surface (F) at the inner circumference of the pipette tip (P) and has a reference area (RP) on an exposed portion (10b).

15. The device according to claim 14, wherein the mandrel (10) is provided with a longitudinal bore (11) for applying negative or positive pressure.

16. The device according to claim 14 or 15, wherein the mandrel (10) is rotatably mounted.

## Revendications

1. Procédé de contrôle de pièces allongées moulées par injection (P) ayant un axe de symétrie (S), en particulier des pointes de pipette,
dans un dispositif de maintien (H), comprenant les étapes suivantes :
- détection d'une zone de référence (RP) s'étendant dans la direction axiale de la pièce moulée par injection (P) dans une première zone de mesure (1) de la pièce moulée par injection (P) allongée dans le dispositif de maintien (H) par des moyens de détection (K1), la zone de référence (RP) étant choisie de telle sorte que l'axe de symétrie (S) de la pièce moulée par injection (P) dans la zone de référence (RP) peut être calculé à partir des données de mesure de la zone de référence (RP) (première étape),
- calculer l'axe de symétrie (S) dans la zone de référence (RP) à partir des données de mesure de la zone de référence (RP) mesurée (deuxième étape),
- mesurer la position spatiale d'une section d'axe de symétrie (S2) d'une deuxième zone de mesure (2) de la pièce moulée par injection allongée (P), espacée axialement de la première zone de mesure (1), y compris une orientation et une position d'un axe de symétrie à l'intérieur de la section d'axe de symétrie (S2) (troisième étape), et
- déterminer si la position spatiale de l'axe de symétrie de la section d'axe de symétrie (S2) de la pièce moulée par injection (P) mesurée dans la troisième étape dans la deuxième zone de mesure (2) coïncide ou non avec l'axe de symétrie (S) calculé dans la deuxième étape.

2. Procédé selon la revendication 1, dans lequel on définit une zone de tolérance (T) autour d'un axe de symétrie (S) calculé à partir de la zone de référence (RP) et on calcule si la position du segment d'axe de symétrie (S2) déterminé par mesure se trouve ou non à l'intérieur de la zone de tolérance (T).

3. Procédé selon la revendication 1 ou 2, dans lequel une surface d'enveloppe ou une partie d'une surface d'enveloppe sur une pièce moulée par injection (P) à symétrie de révolution est utilisée comme zone de référence (RP) dans la première zone de mesure (1).

4. Procédé selon l'une des revendications 1 ou 2, dans lequel au moins une surface de la pièce moulée par injection (P) transversale à l'axe de symétrie (S) est utilisée comme zone de référence (RP).

5. Procédé selon la revendication 4, dans lequel deux surfaces de section transversale de la pièce moulée par injection (P), espacées dans la direction axiale et situées transversalement à l'axe de symétrie (S), sont utilisées comme zones de référence (RP₁, RP₂).

6. Procédé selon l'une quelconque des revendications précédentes, dans lequel la zone de référence (RP) est détectée par un moyen de détection (K1), tel qu'une caméra, orienté transversalement à l'axe de symétrie (S) vers la zone de référence (RP).

7. Procédé selon l'une quelconque des revendications précédentes, dans lequel la position de la portion d'axe de symétrie (S2) de la pièce injectée est mesurée par un moyen de détection (K2), tel qu'une caméra, orienté dans la direction axiale vers la deuxième zone de mesure (2) de la pièce injectée (P).

8. Procédé selon l'une des revendications 6 ou 7, dans lequel, au moyen d'une caméra (K) avec des renvois de miroir, on saisit aussi bien dans la direction axiale la position du tronçon d'axe de symétrie (S2) que transversalement à la direction axiale les données de mesure de la zone de référence (RP).

9. Dispositif pour contrôler des pièces moulées par injection (P) allongées avec un axe de symétrie (S), en particulier des pointes de pipette, dans un dispositif de maintien (H), comprenant
une unité de calcul (C) dans laquelle une zone de référence (R) s'étendant dans la direction axiale sur la pièce moulée par injection à mesurer est prédéfinie comme base de calcul,
un axe de référence (RA) pouvant être calculé à partir des données de la zone de référence (R),
au moins un moyen de détection (KI) qui est orienté transversalement à l'axe de symétrie (S) d'une pièce moulée par injection (P) maintenue dans le dispositif de maintien (H) et qui est ainsi réalisé,
en ce que le moyen de détection détecte une zone de référence (RP) sur la pièce moulée par injection (P) correspondant à la zone de référence (R) prédéfinie dans l'unité de calcul (C) et calcule à partir des données de mesure un axe de symétrie (S) à l'intérieur de la zone de référence (RP) mesurée dans la zone de référence (RP), et
au moins un autre moyen de détection (K2) pour mesurer l'axe de symétrie (S) dans une deuxième zone de mesure (2) à une distance dans la direction axiale de la première zone de mesure (1) sur la base d'une orientation et d'une position de la pièce moulée par injection (P) à l'intérieur d'une partie d'axe de symétrie (S2) dans la deuxième zone de mesure (2), dans lequel l'unité de calcul (C) est conçue pour déterminer une concordance ou une non-concordance entre la position spatiale de l'axe de symétrie dans la partie d'axe de symétrie (S2) dans la deuxième zone de mesure (2) et l'axe de symétrie calculé (S) dans la zone de référence (RP).

10. Dispositif selon la revendication 9, dans lequel des moyens de détection dans la première zone de mesure (1) et/ou dans la deuxième zone de mesure (2) sont orientés de manière décalée de 90° l'un par rapport à l'autre sur l'axe de symétrie (S) de la pièce moulée par injection (P).

11. Dispositif selon la revendication 9, dans lequel des moyens de détection sont orientés dans la première zone de mesure (1) transversalement à l'axe de symétrie (S) de la pièce moulée par injection (P) et dans la deuxième zone de mesure (2), des moyens de détection sont orientés dans la direction axiale sur une face frontale de la pièce moulée par injection.

12. Dispositif selon la revendication 9, dans lequel des moyens de détection (K1a, K1b) espacés dans la direction axiale sont prévus dans la première zone de mesure (1) latéralement sur l'axe de symétrie (S) de la pièce moulée par injection (P) pour détecter une surface de section transversale de la pièce moulée par injection comme zone de référence (RP₁, RP₂).

13. Dispositif selon l'une des revendications 9 à 12, dans lequel il est prévu comme moyens de détection des caméras électroniques, des interféromètres ou des capteurs infrarouges, des capteurs 3D ou des caméras stéréoscopiques.

14. Dispositif selon l'une des revendications précédentes 9 à 13, dans lequel il est prévu un mandrin (10) destiné à recevoir une pièce injectée à symétrie de révolution, comme par exemple un embout de pipette (P), qui s'applique par une surface d'appui (F) contre la périphérie intérieure de l'embout de pipette (P) et qui présente une zone de référence (RP) sur une portion (10b) dégagée.

15. Dispositif selon la revendication 14, dans lequel le mandrin (10) est pourvu d'un alésage longitudinal (11) pour l'application d'une dépression ou d'une pression supérieure.

16. Dispositif selon la revendication 14 ou 15, dans lequel le mandrin (10) est monté rotatif.
